# FASCICULE DE BREVET EUROPEEN

(11) **EP 1 545 184 B1**
(45) Date de publication et mention de la délivrance du brevet: **04.03.2009**
(21) Numéro de dépôt: 03760025.1
(22) Date de dépôt: 13.06.2003
(51) Int. Cl.: A01B 63/111

(54) **DISPOSITIF POUR AMELIORER LE SUIVI DE RELIEF PAR UN OUTIL AGRICOLE ATTELE A UN TRACTEUR**
VERFAHREN ZUR VERBESSERUNG DES FOLGENS EINES BODENPROFILS DURCH EIN AN EINEN TRAKTOR GEKUPPELTES LANDWIRTSCHAFTLICHES GERÄT
METHOD FOR IMPROVING LANDFORM CONFIGURATION TRACKING BY AN AGRICULTURAL IMPLEMENT COUPLED TO A TRACTOR

(30) Priorité: 18.06.2002 FR 0207461
(43) Date de publication de la demande: 29.06.2005
(73) Titulaire: Defrancq, Hubert, 02190 Guignicourt (FR)
(72) Inventeur: Defrancq, Hubert, 02190 Guignicourt (FR)
(74) Mandataire: Michardière, Bernard
(86) Numéro de dépôt international: PCT/FR2003/001780
(87) Numéro de publication internationale: WO 2003/105565

(56) Documents cités:
- EP-A- 0 707 783
- DE-A- 4 001 495
- FR-A- 2 594 626
- FR-A- 2 649 810
- FR-A- 2 722 941

## Description

L'invention est relative à un dispositif pour améliorer le suivi de relief par un outil agricole attelé à un tracteur sur un relevage trois points qui comporte, en partie basse, deux bras articulés sur un axe lié au tracteur pour l'accrochage de deux points bas latéraux de l'outil, et en partie haute au moins un élément de liaison de troisième point entre tracteur et outil, les bras étant commandés par des moyens de relevage et l'élément de liaison de troisième point ayant une longueur utile qui peut varier, le dispositif comprenant un moyen sensible à la position angulaire d'au moins un bras, prévu pour agir sur la position d'au moins un des trois points d'accrochage de l'outil relativement au tracteur, et un moyen sensible à la longueur de l'élément de liaison de troisième point, l'ensemble étant propre à fournir un signal résultant qui sert à commander les moyens de relevage .

DE 40 01 495 montre un dispositif de ce type. La variation de longueur de l'élément de liaison de troisième point est détectée par un dispositif de mesure non précisé. La position des bras inférieurs du relevage est déterminée en explorant une came sur l'arbre du relevage. Les grandeurs de mesure sont envoyées à un appareil de régulation. Dans un tel dispositif il n'apparaît pas que la combinaison des grandeurs de mesure puisse être aisément et rapidement modifiée, notamment pour une adaptation aux conditions de travail.

FR-A-2 722 941 montre un dispositif de contrôle d'un outil agricole faisant intervenir le taux de patinage du tracteur pour agir sur la position d'au moins un des trois points d'accrochage de l'outil. L'élément de liaison de troisième point comprend un vérin du type à double effet. Ce vérin peut fonctionner avec gavage de liquide sous faible pression pour permettre à l'outil de pivoter autour des points d'accrochage inférieurs pour un suivi du relief longitudinal, ou en mode bloqué avec une longueur constante, ce qui permet un report de charge sur les roues du tracteur lors de la commande de remontée du relevage en fonction du taux de patinage, et améliore la capacité de traction du tracteur.

Ce dispositif donne satisfaction mais ne permet pas de corriger la hauteur des points d'accrochage inférieurs du relevage en fonction des variations longitudinales du relief.

US-A-4 508 178 concerne un relevage pour tracteur dans lequel le moyen sensible à la position angulaire d'au moins un bras fait intervenir un composant hydraulique qui agit sur l'élément de liaison de troisième point constitué par un vérin hydraulique. La commande de la montée ou de la descente des bras inférieurs du relevage est effectuée en fonction de l'effort qui agit sur l'élément de liaison de troisième point. Ce dispositif ne peut fonctionner qu'avec un vérin hydraulique de troisième point et circuits hydrauliques associés. L'efficacité de traction est réduite car une partie du poids qui pourrait être supportée par les roues motrices est transférée sur des éléments non moteurs, par exemple roue de jauge de l'outil accroché au tracteur. En outre un tel dispositif est difficile à régler, notamment en ce qui concerne les volumes d'huile transvasés d'une chambre de vérin dans l'autre. Dans le cas où le moyen sensible à la position angulaire des bras est constitué par un vérin auxiliaire supplémentaire la mise en place d'un tel vérin est délicate car l'espace disponible est réduit. Lorsque le choix des paramètres du dispositif est effectué, il n'y a pas moyen de modifier la relation de mouvement du troisième point par rapport au tracteur pour une adaptation à des longueurs d'outils différentes ; or, une même courbe de sol, bosse ou creux, induit des variations angulaires entre le relevage et l'outil différentes selon la longueur de l'outil. La hauteur d'attelage sur l'outil, ou sur le tracteur, du troisième point influence la relation entre le volume d'huile déplacé dans le vérin de troisième point et la variation de hauteur liée au mouvement des bras inférieurs du relevage.

Contrairement à FR-A-2 722 941, US- 4 508 178 ne permet pas de dissocier le circuit hydraulique de l'élément de liaison de troisième point, du circuit hydraulique du relevage.

L'invention a pour but, surtout, de remédier aux inconvénients exposés précédemment et notamment de fournir un dispositif pour améliorer le suivi de relief par un outil agricole qui permette un montage aisé et facile à reconfigurer selon la géométrie du relevage et la nature de l'outil. Il est de plus souhaitable que le dispositif n'assure pas un délestage du tracteur par transfert de charge sur l'outil. Il est souhaitable également que le dispositif permette de faire intervenir un report de charge sur le tracteur, pour amélioration de la capacité de traction, sans introduire d'altération au niveau du fonctionnement et sans exiger un calibrage spécifique.

Selon l'invention, telle qu'elle est caractérisée dans les revendications, un dispositif pour améliorer le suivi de relief par un outil, notamment agricole, attelé à un tracteur sur un relevage trois points, du genre défini précédemment, est caractérisé par le fait que le moyen sensible comprend au moins un premier transducteur associé à un bras pour fournir un signal électrique dépendant de la position angulaire de ce bras, et au moins un deuxième transducteur sensible à la longueur de l'élément de liaison de troisième point pour fournir un signal électrique dépendant de cette longueur, qu'un circuit électrique est prévu avec les transducteurs branchés en parallèle entre une borne d'alimentation et la masse, et le signal résultant du mélange des signaux des transducteurs est envoyé sur une borne d'entrée d'un comparateur, dont une autre borne d'entrée est reliée à la masse, le comparateur fournissant sur sa sortie le signal de commande.

Le circuit électrique assurant le mélange des signaux des transducteurs peut moduler l'influence de chacun des signaux selon les composants utilisés dans le circuit, de sorte que le signal issu de l'élément de liaison de troisième point peut avoir un effet différent dans l'importance de la variation de hauteur du relevage.

La commande du relevage est effectuée par comparaison du signal résultant avec une valeur de consigne qui peut être ajustée à volonté et modulée en fonction de paramètres extérieurs, notamment en fonction du taux de patinage.

Le montage des transducteurs, généralement constitué par des capteurs analogiques, avec un contrôleur permet de faire varier l'influence du signal issu du capteur de l'élément de liaison de troisième point sur le degré de réaction du relevage.

L'élément de liaison de troisième point peut être constitué par une simple bielle télescopique qui n'intervient, pour transmettre un effort, que lorsque l'outil est totalement relevé du sol.

Un avantage majeur du dispositif de l'invention, lorsque l'élément de liaison de troisième point est constitué par un vérin, est d'éviter une relation hydraulique entre le ou les vérins constituant les moyens de relevage et le vérin de troisième point.

Le dispositif selon l'invention permet d'assurer le suivi de relief tout en permettant l'application d'une pression dans le vérin de troisième point dans la chambre appropriée pour provoquer un raccourcissement de ce vérin.

S'il est nécessaire d'assurer le passage en mode porté intégral de l'outil, le dispositif de l'invention l'autorise sans modification de son principe de fonctionnement.

Le dispositif de l'invention permet à un outil de suivre parfaitement le relief longitudinal et de conserver une profondeur de travail régulière y compris lorsque se produit une variation de la position du relevage par rapport au sol en raison de l'écrasement variable des pneumatiques ou de la présence d'une suspension.

Le fonctionnement de l'avant et de l'arrière étant indépendant, ce système est parfaitement adapté à une utilisation d'un outil avant ou arrière ou simultanée d'outil avant et arrière.

De plus cette possibilité est offerte sans altérer l'aptitude à prélever le poids du ou des outils pour le transférer sur le tracteur afin d'améliorer sa capacité de traction. En effet, lorsque l'élément de liaison de troisième point hydraulique est alimenté par une source à pression plus faible que la valeur nécessaire pour soulever l'outil, on obtient un report de charge partiel tout en autorisant un pivotement de l'outil par rapport à ses points d'accrochage inférieurs.

Le relevage peut comporter un cadre intermédiaire avec en partie haute deux points d'accrochage latéraux et deux vérins de troisième point s'étendant respectivement entre les deux points latéraux du cadre et le troisième point situé sur le tracteur ou l'ossature fixée au tracteur; deux deuxièmes transducteurs peuvent être prévus, à savoir un deuxième transducteur associé respectivement à chaque vérin de troisième point, pour fournir un signal électrique dépendant de la longueur du vérin de troisième point associé.

Les signaux électriques de tous ces transducteurs sont mélangés dans le circuit électrique pour fournir le signal résultant de commande des moyens de relevage.

Le premier transducteur peut être constitué par un capteur potentiométrique ayant un curseur déplacé en réponse au mouvement angulaire du bras.

Le deuxième transducteur peut également être constitué par un capteur potentiométrique dont le curseur est déplacé en réponse à la variation de longueur de l'élément de liaison de troisième point.

L'élément de liaison de troisième point est généralement constitué par un élément télescopique, bielle de longueur variable ou vérin, comprenant deux pièces coulissantes dont l'une est liée au tracteur et l'autre est attachée à l'outil; le capteur potentiométrique du deuxième transducteur comprend alors un corps fixé sur l'une des pièces avec un curseur rotatif autour du centre du corps, ce curseur comportant un doigt s'étendant radialement , tandis qu'une biellette de longueur constante est articulée à une extrémité sur un point du doigt éloigné du centre de rotation et, à son autre extrémité, sur l'autre pièce de l'élément de liaison.

D'autres types de capteurs, par exemple capteurs linéaires potentiométriques ou capteurs inductifs, peuvent être prévus pour mesurer la variation de longueur de l'élément de liaison de troisième point, ou la position angulaire des bras de relevage.

Le dispositif de l'invention peut être couplé avec un dispositif de contrôle du patinage du tracteur comprenant un vérin hydraulique de troisième point gavé sous faible pression et passant en mode bloqué à longueur constante lorsque le taux de patinage dépasse une limite donnée, autorisant ainsi le transfert de charge sur le tracteur lorsque les bras sont commandés à la remontée.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

Sur ces dessins :
Fig.1 est une vue schématique de côté de l'avant d'un tracteur équipé d'un dispositif selon l'invention .
Fig.2 est un schéma simplifié du circuit électrique assurant le mélange des signaux des transducteurs.
Fig. 3 est un schéma partiel simplifié d'une variante du circuit de Fig.2 assurant le mélange des signaux des transducteurs.
Fig.4 est une vue schématique en perspective simplifiée de l'avant d'un tracteur équipé d'un relevage avec cadre intermédiaire.
Fig.5 est un schéma simplifié du raccordement au circuit électrique d'un premier transducteur et d'un second transducteur.
Fig.6 est un schéma simplifié du branchement de deux premiers transducteurs associés respectivement aux deux bras de levage et d'un second transducteur.
Fig.7, enfin, est un schéma simplifié du branchement de deux premiers transducteurs associés aux deux bras de levage et de deux seconds transducteurs associés à deux vérins de troisième point selon Fig.4.

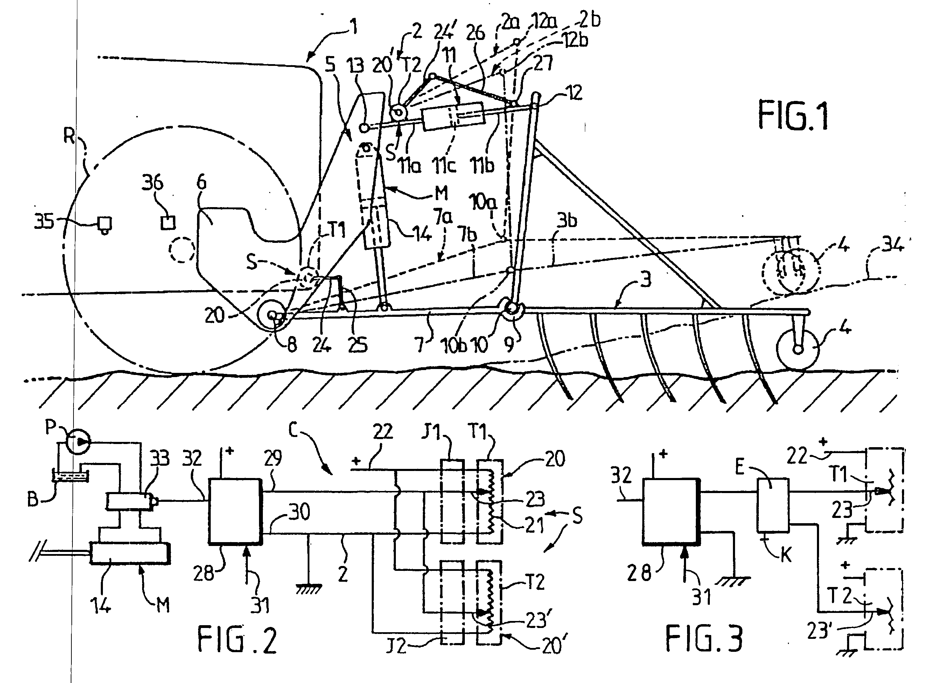

En se reportant à Fig.1 des dessins, on peut voir un tracteur 1 équipé d'un relevage 2 du type relevage trois points. Dans l'exemple représenté, le relevage 2 est situé à l'avant du tracteur et sert à l'attelage d'un outil 3 de travail du sol qui est poussé par le tracteur. Cet outil est muni à l'avant d'une ou plusieurs roues de jauge 4. Cet exemple de représentation n'est pas limitatif et l'invention s'applique également aux relevages montés à l'arrière du tracteur pour des outils tractés.

Le relevage 2 comprend une ossature 5 constituée de deux flasques tels que 6 fixés de chaque côté du châssis du tracteur entre le châssis et la roue avant R située du même côté et qui, en réalité, masque la partie arrière de l'ossature 5 pour faciliter la lecture du dessin, la roue R a été représentée en trait spectral ce qui permet de voir également la partie arrière de l'ossature.

Le relevage 2 comporte, en partie basse de l'ossature, deux bras 7 prévus respectivement de chaque côté du châssis du tracteur et s'étendant suivant la direction longitudinale du tracteur. Dans le cas d'un relevage avant les bras 7 s'étendent vers l'avant du tracteurs; dans le cas d'un relevage arrière les bras inférieurs s'étendent vers l'arrière du tracteur. Les bras 7 sont articulés à leur extrémité éloignée de l'outil 3 sur un axe transversal 8 porté par l'ossature 5 en partie basse. L'extrémité des bras 7 tournée vers l'outil 3 est munie d'une main d'accrochage 9 ou moyen équivalent. Cette main 9 peut recevoir l'un des deux points bas latéraux d'accrochage 10 de l'outil. Chaque point 10 est généralement constitué par un axe fixé sur le côté de l'outil, et orienté transversalement c'est à dire perpendiculairement à la direction d'avance du tracteur et de l'outil.

En partie haute un élément de liaison 11 de troisième point est prévu entre l'ossature 5 et un troisième point d'accrochage 12 de l'outil, généralement prévu dans un plan moyen longitudinal vertical situé entre les deux points bas latéraux d'accrochage 10.

A son extrémité opposée au troisième point 12 de l'outil, l'élément de liaison 11 est relié au troisième point 13 d'accrochage du relevage 5. Ce troisième point est situé en partie haute et dans la zone médiane de l'ossature 5. La liaison de l'élément 11 avec les points 12 et 13 est assurée par une articulation autour d'un axe horizontal perpendiculaire au plan moyen vertical longitudinal du tracteur.

L'élément de liaison 11 de troisième point a une longueur utile qui peut varier. Selon une première possibilité, l'élément 11 se compose de deux parties, 11a, 11b montées coulissantes l'une par rapport à l'autre, et formant par exemple une bielle télescopique. En variante, l'élément 11 peut avoir une longueur constante et être attelé à un axe 12 pouvant coulisser dans une lumière prévue en partie haute de l'outil 3.

La longueur utile de l'élément 11 correspond, en quelque sorte, à la distance entre le troisième point 13 du relevage et un point de l'outil 3 à la hauteur de l'axe 12.

Un tel élément de liaison 11 dont la longueur utile est variable n'est pas soumis à des contraintes lorsque l'outil 3, semi-porté par la ou les roues de jauge 4, est au travail. La barre de troisième point formée par l'élément de liaison 11 ne sert qu'à soulever l'outil 3 hors du sol pour les manoeuvres.

Selon une autre possibilité, l'élément de liaison 11 est constitué par un vérin double effet avec un piston 11c, une partie cylindre 11a et une partie tige 11b liée au piston 11c. La partie 11b,11c peut coulisser relativement à 11a. Le circuit hydraulique d'alimentation des chambres situées de part et d'autre du piston 11c est prévu pour assurer au moins deux configurations. Selon une première configuration, le piston 11c peut coulisser dans le cylindre, une pression de gavage de liquide inférieure à la pression nécessaire pour soulever l'outil étant appliquée dans la chambre dont le volume à tendance à diminuer lors du mouvement de remontée du relevage, l'autre chambre étant reliée au retour sans pression; le vérin joue alors un rôle semblable à celui d'une bielle télescopique, mais avec en plus transfert de charge partiel du poids de l'outil sur le tracteur. Selon une autre configuration, commandée à volonté (par exemple en fonction du taux de patinage), un volume de liquide est emprisonné dans la chambre du vérin qui a tendance à diminuer de volume lors du mouvement de remontée du relevage; le piston 11c est bloqué de sorte que la longueur de l'élément 11 reste constante; on obtient alors un report de charge complet de l'outil sur le tracteur.

Les bras inférieurs 7 sont commandés par des moyens de relevage M, de préférence constitués par un ou plusieurs vérins hydrauliques 14 double effet , dont l'extrémité du cylindre (par exemple) est attachée à l'ossature 5 et l'extrémité de la tige est attachée au bras 7. Lorsque la tige du vérin 14 rentre dans le cylindre sous l'effet de la pression de liquide, les bras 7 se relèvent, soulevant les points 10. L'outil 3 peut pivoter autour des points d'accrochage inférieurs 10.

Le dispositif comprend un moyen S sensible à la position angulaire d'au moins un bras 7, prévu pour agir sur la position d'au moins un des trois points d'accrochage (10,12) de l'outil et ainsi pour modifier l'attitude de l'outil relativement au tracteur.

Le moyen sensible S comprend au moins un premier transducteur T1 propre à fournir un signal électrique dépendant de la position angulaire du bras 7 et au moins un deuxième transducteur T2 sensible à la longueur de l'élément 11 de liaison de troisième point, prévu pour fournir un signal électrique dépendant de cette longueur.

En outre un circuit électrique C (Fig.2) est prévu pour assurer un mélange des signaux des transducteurs T1 et T2 et fournir un signal résultant qui sert à commander le(s) vérin(s) de relevage 14, ou plus généralement les moyens de relevage M.

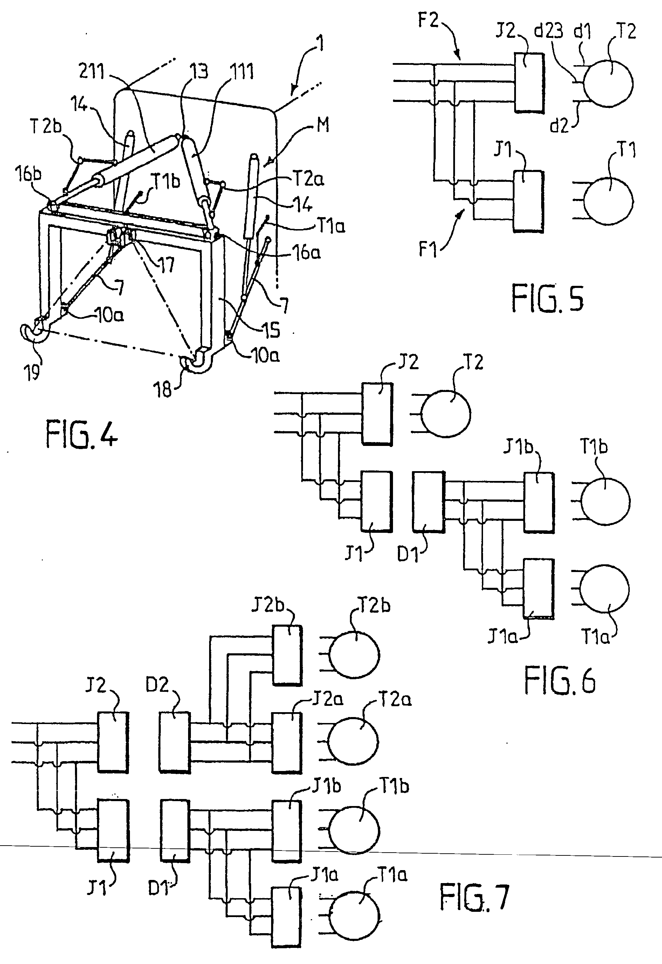

Avec un relevage dont les deux bras latéraux 7 peuvent avoir des mouvements angulaires différents, en particulier peuvent osciller en opposition pour permettre un suivi transversal du relief, deux premiers transducteurs T1a, T1b (Figs.6 et 7) sont avantageusement associés respectivement à chaque bras latéral 7, pour fournir un signal électrique dépendant de la position angulaire de ce bras.

Comme montré par FR-A-2 722 941, le relevage peut comprendre un cadre intermédiaire 15 (Fig.4) en forme de U renversé. Ce cadre 15 est disposé entre les trois points d'accrochage de l'outil et le relevage proprement dit. Deux vérins de troisième point 111, 211 sont prévus et forment entre eux un angle dont le sommet correspond au troisième point d'accrochage 13 sur l'ossature, ou le tracteur. Les vérins 111, 211 sont du type à double effet. Les extrémités des tiges des vérins 111, 211 sont liées à deux points d'accrochage latéraux 16a, 16b prévus sur la partie supérieure du cadre 15, symétriquement par rapport au troisième point d'accrochage 17 situé au milieu de la partie supérieure du cadre, vers l'avant. Le cadre 15 comporte en outre deux points bas latéraux d'accrochage 18, 19 pour les points bas 10 de l'outil. En partie basse à l'arrière, de chaque côté, le cadre 15 comporte des points d'accrochage 10a sur lesquels viennent s'atteler les mains d'accrochage 9 du relevage. Dans ce cas, deux deuxièmes transducteurs T2a, T2b (Figs.4 et 7) sont associés respectivement aux vérins 111, 211 de troisième point pour fournir un signal électrique dépendant de la longueur du vérin de troisième point associé.

Chaque premier transducteur T1, ou T1a, T1b, peut être constitué par un capteur potentiométrique 20 (Fig.2) comportant une résistance 21 branchée entre une borne 22 d'alimentation + , par exemple sous 12 volts en courant continu, et la masse. La sortie du capteur est fournie par un curseur mobile 23 qui peut être déplacé sur la résistance électrique 21 et permet de prélever une tension électrique dépendant de sa position. La résistance électrique 21 est de préférence disposée suivant un cercle et le curseur 23 se déplace angulairement suivant un rayon de ce cercle autour du centre. Le corps du capteur 20 est fixé contre l'ossature 5. Le curseur 23 est lié à un doigt 24 (Fig.1) s'étendant radialement; l'extrémité du doigt éloignée du centre du capteur 20 est reliée par une articulation à une biellette 25 de longueur constante , de préférence réglable, s'étendant sensiblement verticalement et reliée à son extrémité inférieure, par une articulation, au bras 7. Le doigt 24 et la biellette 25 forment une sorte de compas dont les branches sont sensiblement à angle droit lorsque le bras 7 est horizontal. Lorsque le bras 7 se déplace angulairement le doigt 24 et le curseur 23 sont entraînés en rotation autour du centre du capteur 20.

Chaque deuxième transducteur T2 est avantageusement constitué par un capteur potentiométrique 20' semblable à celui décrit précédemment. Le corps du capteur 20' est fixé sur l'une des parties par exemple 11a, de l'élément 11. Le doigt 24' du curseur 23' est relié par une articulation , à son extrémité éloignée du centre du capteur 20', à une biellette 26 de longueur constante (de préférence réglable) dont l'autre extrémité est articulée sur un point 27 fixé à l'autre partie 11b de l'élément 11. L'ouverture du compas formé par le doigt 24 et la biellette 26 dépend de la distance entre les points 12 et 13, c'est-à-dire de la longueur effective de l'élément 11. La position du curseur du capteur T2 dépendra également de cette longueur d'où un signal de sortie en relation avec la longueur.

Selon le schéma de Fig.2, le mélange des signaux fournils par les transducteurs T1 et T2 est obtenu en raccordant à une borne d'entrée 29, d'un comparateur 28, les deux curseurs 23, 23' branchés en parallèle; une autre borne d'entrée 30 du comparateur 28 est reliée à la masse. Les deux transducteurs T1 et T2 sont branchés en parallèle entre la borne + 22 et la masse. Plus généralement, quel que soit le type de transducteur, les sorties des transducteurs sont branchées en parallèle sur la borne 29.

Une borne 31 du comparateur 28 est prévue pour l'introduction d'une valeur de consigne soit à partir d'une commande manuelle par l'opérateur, soit à partir d'une commande automatique par exemple sensible à des paramètres de fonctionnement du tracteur, en particulier sensible au patinage.

L'exemple de Fig.2 pour le mélange des signaux sortants de T1 et T2 n'est pas limitatif. Il est possible d'introduire des résistances ou des circuits amplificateurs, ou autres, pour chaque signal de façon à moduler le mélange des signaux et leurs influences respectives.

Fig. 3 montre partiellement une variante du circuit de Fig.2 dont seules les parties modifiées ont été représentées. Les curseurs 23, 23', ou sorties, des transducteurs T1, T2, sont reliés respectivement à deux bornes d'entrée d'un circuit électronique mélangeur E qui peut faire varier les gains des signaux issus de 23, 23' l'un par par rapport à l'autre. L'influence de T1 et de T2 peut ainsi être modulée. Un moyen de réglage K, en particulier manuel, de la modulation introduite par E peut être prévu, notamment pour tenir compte de la longueur de l'outil 3 attelé, de la distance entre les points bas latéraux 10 et le troisième point haut 12, et/ou du type de relief.

Le circuit 28 fournit, sur sa sortie 32, un signal résultant qui commande, par exemple, une électrovanne 33 commandant le (s) vérin (s) 14 dont les chambres peuvent soit être reliées à une pompe P fournissant du liquide sous pression ou à un réservoir de liquide hors pression, soit être isolées.

Le circuit C pourrait comprendre un contrôleur ou micro-calculateur pour gérer les différents signaux et commander les moyens de relevage en conséquence.

Les transducteurs T1, T1a, T1b et T2, T2a, T2b sont équipés de trois fiches de sortie d1, d2, d23 correspondant aux deux points extrêmes de la résistance 21 et au curseur 23. Un connecteur J1, J2 (non représenté sur Fig.3) est prévu pour établir la connexion avec les fiches en question par un mouvement de translation. Des câbles F1, F2 munis à une extrémité des connecteurs J1, J2 sont reliés au circuit C.

Dans le cas de plusieurs transducteurs T1a, T1b, les connecteurs correspondants J1a, J1b sont prévus comme illustré sur Fig.6 et 7. On peut effectuer un mélange des signaux des transducteurs T1a, T1b, à l'aide des connecteurs J1a, J1b dont les fils sont reliés entre eux pour aboutir à une fiche de sortie D1 qui peut se raccorder au connecteur J1 (Fig.6).

Une disposition analogue peut être prévue, selon Fig.7, pour deux deuxièmes transducteurs T2a, T2b. Les connecteurs J2a, J2b associés à chaque transducteur sont reliés en parallèle aux bornes de la fiche D2 qui peut coopérer avec le connecteur J2.

Les connecteurs J1a, J1b avec la fiche de sortie D1 (de même que les connecteurs J2a, J2b avec la fiche de sortie D2) constituent un module permettant de mélanger deux signaux. Un relevage classique qui ne comporte qu'un transducteur T1 de bras de relevage avec un connecteur J1 recueillant le signal peut être transformé aisément en relevage selon l'invention: on ajoute un transducteur T2 de troisième point et on mélange les signaux de T1 et T2 en insérant le module J1a, J1b, D1, par exemple en raccordant le transducteur T1 à J1a, le transducteur T2 à J1b, et en reliant la fiche D1 au connecteur J1.

Le dispositif présente une grande souplesse puisque les connecteurs J1, J2 sur le tracteur peuvent rester inchangés, les variantes n'intervenant qu'au niveau des capteurs situés sur le relevage.

Selon la façon dont le branchement parallèle entre les capteurs T1 et T2 est réalisé, on peut faire varier l'influence du signal issu du capteur T2 de troisième point sur le degré de réaction du relevage .

Le fonctionnement du dispositif pour améliorer le suivi du relief est schématiquement illustré sur Fig.1 où une montée 34 du sol, correspondant par exemple à une bosse du terrain, est représentée en tirets.

Si le transducteur T2 était seul à commander le (s) vérin (s) de relevage 14, la longueur effective de l'élément de liaison 11 resterait constante et le point 12 décrirait un arc de cercle centré sur le point 13 et viendrait en 12a. La configuration du relevage correspondrait à 2a,7a illustrée en tirets. La partie arrière de l'outil 3 serait soulevée et pratiquement sortie du sol alors que la profondeur de travail au niveau de la roue de jauge 4 serait conservée.

Si le transducteur T1 était seul à commander le (s) vérin (s) de relevage 14, chaque bras 7 conserverait sa position angulaire relativement au tracteur et la partie arrière de l'outil 3 s'enfoncerait trop dans le sol.

Selon l'invention, comme le signal du transducteur T2 est mélangé au signal fourni par le transducteur T1, une diminution de la longueur de élément de liaison 11 est autorisée et les bras 7 vont se relever jusqu'à la position 7b représentée en trait mixte. En partie haute le point 12 se rapproche du point 13 et vient en 12b. L'outil 3 vient en 3b et reste sensiblement parallèle à la partie montante 34 du sol de sorte que la profondeur de travail à l'arrière de l'outil est sensiblement égale à celle existant au niveau de la roue de jauge 4.

Dans le cas d'un creux, et d'une partie de sol en descente, les mouvements inverses se produiraient.

Le montage avec des capteurs analogiques T1, T2, et un contrôleur permet de faire varier l'influence du signal issu de l'élément 11 de troisième point sur le degré de réaction des moyens de relevage M, 14.

Un avantage du dispositif est d'éviter toute relation hydraulique entre le ou les vérins de levage 14 et le vérin 11 de troisième point.

Avec ce dispositif il est possible de faire suivre parfaitement le relief longitudinal par un outil et de conserver une profondeur de travail régulière y compris lorsqu'il y a variation de la position du relevage par rapport au sol en raison de l'écrasement variable des pneumatiques, ou de la présence d'une suspension.

Le fonctionnement de l'avant et de l'arrière étant indépendant, ce dispositif est parfaitement adapté à une utilisation d'un outil avant ou arrière, ou simultanée d'outil avant et arrière.

De plus cette possibilité est permise sans altérer l'aptitude à prélever le poids du ou des outils pour le transférer sur le tracteur afin d'améliorer sa capacité de traction.

En effet, lorsque l'élément 11 est constitué par un vérin double effet , on peut bloquer sa longueur lors du soulèvement des bras 7 pour obtenir un report d'une partie de la charge supportée par la (les) roue (s) de jauge 4 sur le tracteur afin d'améliorer sa capacité de traction, comme prévu dans FR-A-2 722 941.

En particulier, lorsque le tracteur est équipé de moyens de mesure du patinage relativement au sol, le blocage de la longueur du vérin 11 peut être commandé en fonction du taux de patinage. Les moyens de mesure du patinage peuvent comprendre, par exemple, un radar 35 fixé sur le bâti du tracteur, dirigé vers le sol, et propre à fournir la vitesse réelle du tracteur par rapport au sol. Un capteur 36 est en outre associé à une roue motrice du tracteur (dans l'exemple considéré on suppose que la roue avant R est également motrice, sinon le capteur 36 est associé à une roue arrière) pour compter le nombre de tours de roue par unité de temps et déterminer, à partir du périmètre de la roue, la vitesse théorique que devrait avoir le tracteur en l'absence de patinage.

Lorsqu'un taux de patinage supérieur à une limite déterminée est détecté, la commande du blocage de la longueur du vérin 11 est assurée, ce qui permet, associé à une remontée des bras 7, de transférer la charge sur les roues avant du tracteur et d'améliorer la capacité de traction.

L'invention permet de corriger la hauteur des points d'accrochage inférieurs 9 du relevage, tout en autorisant simultanément une variation de longueur de l'élément 11, améliorant ainsi de façon significative le suivi de relief longitudinal. De plus , l'invention permet le fonctionnement du système de report de charge tel que décrit dans FR - A- 2 722 941.

En plus du suivi longitudinal du relief un suivi transversal est possible, notamment avec le dispositif de Fig.4.

## Revendications

1. Dispositif pour améliorer le suivi de relief par un outil agricole attelé à un tracteur sur un relevage trois points qui comporte, en partie basse, deux bras (7) articulés sur un axe (8) lié au tracteur pour l'accrochage de deux points bas latéraux (10) de l'outil, et en partie haute au moins un élément de liaison (11) de troisième point entre tracteur et outil, les bras (7) étant commandés par des moyens de relevage (M) et l'élément de liaison (11) de troisième point ayant une longueur utile qui peut varier, le dispositif comprenant un moyen sensible à la position angulaire d'au moins un bras, prévu pour agir sur la position d'au moins un des trois points d'accrochage (10,12) de l'outil relativement au tracteur, et un moyen sensible à la longueur de l'élément de liaison (11) de troisième point, l'ensemble étant propre à fournir un signal résultant qui sert à commander les moyens de relevage (M),
**caractérisé par le fait que** le moyen sensible (S) comprend au moins un premier transducteur (T1) associé à un bras (7) pour fournir un signal électrique dépendant de la position angulaire de ce bras, et au moins un deuxième transducteur (T2) sensible à la longueur de l'élément de liaison (11) de troisième point pour fournir un signal électrique dépendant de cette longueur, qu'un circuit électrique (C) est prévu avec les transducteurs (T1,T2) branchés en parallèle entre une borne d'alimentation (22) et la masse, et le signal résultant du mélange des signaux des transducteurs (T1, T2) est envoyé sur une borne d'entrée (29) d'un comparateur (28), dont une autre borne d'entrée (30) est reliée à la masse, le comparateur (28) fournissant sur sa sortie le signal de commande .

2. Dispositif selon la revendication 1, **caractérisé par le fait que** le mélange des signaux des transducteurs est obtenu par un branchement en parallèle des sorties (23, 23') des transducteurs sur la borne d'entrée (29) du comparateur (28).

3. Dispositif selon la revendication 1, **caractérisé par le fait que** le mélange des signaux des transducteurs est obtenu avec un circuit électronique mélangeur (E), les sorties (23, 23') des transducteurs étant reliées respectivement à deux bornes d'entrée de ce circuit électronique mélangeur (E) qui peut faire varier les gains des signaux issus des sorties (23, 23') l'un par rapport à l'autre .

4. Dispositif selon la revendication 3, **caractérisé par le fait que** le circuit mélangeur (E) comporte un moyen de réglage (K) de la modulation introduite par le circuit, en particulier pour tenir compte de la longueur de l'outil (3) attelé, et de la distance entre les points bas latéraux (10) et le troisième point haut (12).

5. Dispositif selon la revendication 1, **caractérisé par le fait qu'**une borne (31) du comparateur (28) est prévue pour l'introduction d'une valeur de consigne soit à partir d'une commande manuelle par un opérateur, soit à partir d'une commande automatique, en particulier sensible au patinage .

6. Dispositif selon l'une des revendications précédentes, avec relevage dont les deux bras (7) peuvent avoir des mouvements angulaires différents, en particulier pour osciller en opposition, afin de permettre un suivi transversal du relief, **caractérisé par le fait que** le moyen sensible (S) comprend deux premiers transducteurs (T1a, T1b), à savoir un premier transducteur associé à chaque bras (7) pour fournir un signal électrique dépendant de la position angulaire de ce bras.

7. Dispositif selon l'une des revendications précédentes, avec relevage comportant un cadre intermédiaire (15) avec en partie haute deux points d'accrochage latéraux (16a, 16b) et deux vérins (111, 211) de troisième point s'étendant respectivement entre les deux points latéraux du cadre et le troisième point (13) lié au tracteur, **caractérisé par le fait que** deux deuxièmes transducteurs (T2a, T2b) sont prévus, à savoir un deuxième transducteur associé respectivement à chaque vérin (111, 211) de troisième point, pour fournir un signal électrique dépendant de la longueur du vérin de troisième point associé.

8. Dispositif selon l'une des revendications précédentes, **caractérisé par le fait qu'**il est couplé avec un dispositif (35,36) de contrôle du patinage du tracteur comprenant au moins un vérin hydraulique (11; 111, 211) de troisième point gavé sous faible pression et passant en mode bloqué à longueur constante lorsque le taux de patinage dépasse une limite donnée, autorisant ainsi le transfert de charge sur le tracteur lorsque les bras sont commandés à la remontée.

9. Dispositif selon l'une des revendications précédentes, **caractérisé par le fait que** les transducteurs (T1, T1a, T1b et T2, T2a, T2b) sont constitués par des capteurs potentiométriques équipés de trois fiches de sortie (d1, d2, d23) correspondant aux deux points extrêmes d'une résistance (21) et à un curseur (23).

10. Dispositif selon la revendication 9, **caractérisé par le fait qu'** un connecteur (J1, J2) est prévu pour établir la connexion avec les fiches, et que des câbles (F1, F2) munis à une extrémité des connecteurs (J1, J2) sont reliés au circuit (C).

11. Dispositif selon la revendication 9 ou 10, **caractérisé par le fait que** des connecteurs correspondant aux transducteurs ont leurs fils reliés entre eux pour aboutir à une fiche de sortie (D1, D2) pour effectuer un mélange des signaux des transducteurs , la fiche (D1, D2) pouvant se raccorder à un connecteur (J1,J2).

12. Dispositif selon la revendication 7, **caractérisé par le fait qu'**il comporte des connecteurs (J2a, J2b) associés à chaque deuxième transducteur (T2a, T2b) et reliés en parallèle aux bornes d'une fiche (D2) qui peut coopérer avec un connecteur (J2).

## Claims

1. Device for improving the following of surface undulations by an agricultural implement coupled to a tractor on a three-point lift system which comprises, in the bottom portion, two arms (7) articulated on a shaft (8) connected to the tractor for the coupling of two lateral bottom points (10) of the implement, and in the top portion at least one third point link element (11) between the tractor and the implement, the arms (7) being controlled by lifting means (M) and the third point link element (11) having an effective length which may vary, the device comprising a means responsive to the angular position of at least one arm, provided to act on the position of at least one of the three implement coupling points (10, 12) relative to the tractor, and a means responsive to the length of the third point link element (11), the assembly being suitable for providing an aggregate signal which serves to control the lifting means (M),
**characterized in that** the responsive means (S) comprises at least a first transducer (T1) associated with an arm (7) to deliver an electric signal dependent on the angular position of that arm, and at least one second transducer (T2) responsive to the length of the third point link element (11) to deliver an electric signal dependent on that length, **in that** an electric circuit (C) is provided with the transducers (T1, T2) connected in parallel between a power supply terminal (22) and earth, and the signal resulting from the mixing of the signals of the transducers (T1, T2) is sent to an input terminal (29) of a comparator (28), of which another input terminal (30) is connected to earth, the comparator (28) delivering the control signal at its output.

2. Device according to Claim 1, **characterized in that** the mixing of signals of the transducers is obtained by a parallel connection of the outputs (23, 23') of the transducers to the input terminal (29) of the comparator (28).

3. Device according to Claim 1, **characterized in that** the mixing of signals of the transducers is obtained with an electronic mixer circuit (E), the outputs (23, 23') of the transducers being connected respectively to two input terminals of this electronic mixer circuit (E) which may cause the gains of the signals originating from the outputs (23, 23') to vary one with the other.

4. Device according to Claim 3, **characterized in that** the mixer circuit (E) comprises a means of adjustment (K) of the modulation introduced by the circuit, in particular to take account of the length of the coupled implement (3), and of the distance between the lateral bottom points (10) and the third top point (12).

5. Device according to Claim 1, **characterized in that** a terminal (31) of the comparator (28) is provided for entering a setpoint value either via a manual command by an operator, or via an automatic command, in particular responsive to wheel-slip.

6. Device according to one of the preceding claims, with lift system whose two arms (7) may have different angular movements, in particular to oscillate in opposition, in order to allow a transverse following of the surface undulations, **characterized in that** the responsive means (S) comprises two first transducers (T1a, T1b), that is to say a first transducer associated with each arm (7) to deliver an electric signal dependent on the angular position of that arm.

7. Device according to one of the preceding claims, with lift system comprising an intermediate frame (15) with at the top two lateral coupling points (16a, 16b) and two third point cylinders (111, 211) extending respectively between the two lateral points of the frame and the third point (13) connected to the tractor, **characterized in that** two second transducers (T2a, T2b) are provided, that is to say a second transducer associated respectively with each third point cylinder (111, 211), to deliver an electric signal dependent on the length of the associated third point cylinder.

8. Device according to one of the preceding claims, **characterized in that** it is coupled with a tractor wheel-slip control device (35, 36) comprising at least a third point hydraulic cylinder (11; 111, 211) fed at low pressure and transferring to constant length locked mode when the rate of wheel-slip exceeds a given limit, thus allowing the transfer of load to the tractor when the arms are commanded to lift.

9. Device according to one of the preceding claims, **characterized in that** the transducers (T1, T1a, T1b and T2, T2a, T2b) consist of potentiometric sensors fitted with three output contact plugs (d1, d2, d23) corresponding to the two extreme points of a resistor (21) and to a cursor (23).

10. Device according to Claim 9, **characterized in that** a connector (J1, J2) is provided to make the connection with the contact plugs, and **in that** cables (F1, F2) furnished with connectors (J1, J2) at one end are connected to the circuit (C).

11. Device according to Claim 9 or 10, **characterized in that** the connectors corresponding to the transducers have their wires connected together to culminate at an output contact plug (D1, D2) to carry out a mixing of the signals of the transducers, the contact plug (D1, D2) being capable of being connected to a connector (J1, J2).

12. Device according to Claim 7, **characterized in that** it comprises connectors (J2a, J2b) associated with each second transducer (T2a, T2b) and connected in parallel to the terminals of a contact plug (D2) which may interact with a connector (J2).

## Patentansprüche

1. Vorrichtung zum Verbessern des Folgens entlang eines Bodenprofils mit einem landwirtschaftlichen Gerät, das über eine Dreipunkt-Hebeeinrichtung an eine Zugmaschine angehängt ist, wobei die Hebeeinrichtung im unteren Teil zwei Arme (7), welche gelenkig an einer mit der Zugmaschine verbundenen Achse (8) angeordnet sind, um zwei untere seitliche Punkte (10) des Geräts anzubringen, und im oberen Teil ein den dritten Punkt bildendes Verbindungselement (11) zwischen der Zugmaschine und dem Gerät aufweist, wobei die Arme (7) durch Hebeeinrichtungen (M) gesteuert sind und das den dritten Punkt bildende Verbindungselement (11) eine variable Nutzlänge aufweist, wobei die Vorrichtung eine für die Winkelposition mindestens eines Arms empfindliche Einrichtung, welche zum Einwirken auf die Position mindestens eines der drei Anhängepunkte (10, 12) des Geräts in bezug auf die Zugmaschine vorgesehen ist, und eine für die Länge des den dritten Punkt bildenden Verbindungselements (11) empfindliche Einrichtung aufweist, wobei die Anordnung geeignet ist, ein resultierendes Signal auszugeben, das zum Steuern der Hebeeinrichtungen (M) dient,
**dadurch gekennzeichnet, dass** die empfindliche Einrichtung (S) mindestens einen ersten Wandler (T1), der einem Arm (7) zugeordnet ist, um ein von der Winkelposition des Arms abhängiges elektrisches Signal auszugeben, und mindestens einen zweiten Wandler (T2) aufweist, der für die Länge des den dritten Punkt bildenden Verbindungselements (11) empfindlich ist, um ein von dieser Länge abhängiges elektrisches Signal auszugeben, dass eine elektrische Schaltung (C) vorgesehen ist, wobei die Wandler (T1, T2) zwischen einer Anschlussklemme (22) und Masse parallel verzweigt sind, und das aus einer Mischung der Signale der Wandler (T1, T2) resultierende Signal an einen Eingangsanschluss (29) eines Komparators (28) geliefert wird, dessen anderer Eingangsanschluss (30) mit Masse verbunden ist, wobei der Komparator (28) an seinem Ausgang das Steuersignal ausgibt.

2. Vorrichtung nach Anspruch 1, **dadurch gekennzeichnet, dass** die Mischung der Signale der Wandler durch eine Parallelverzweigung der Ausgangsanschlüsse (23, 23') der Wandler an dem Eingangsanschluss (29) des Komparators (28) erhalten wird.

3. Vorrichtung nach Anspruch 1, **dadurch gekennzeichnet, dass** die Mischung der Signale der Wandler mittels einer elektronischen Mischerschaltung (E) erhalten wird, wobei die Ausgangsanschlüsse (23, 23') der Wandler jeweils mit zwei Eingangsanschlüssen der elektronischen Mischerschaltung (E) verbunden sind, welche die Verstärkung der aus den Ausgangsanschlüssen (23, 23') ausgegebenen Signale in bezug zueinander verändern kann.

4. Vorrichtung nach Anspruch 3, **dadurch gekennzeichnet, dass** die Mischerschaltung (E) eine Einrichtung (K) zum Regeln der durch die Schaltung eingebrachten Modulation aufweist, insbesondere um die Länge des angehängten Geräts (3) und den Abstand zwischen den unteren seitlichen Punkten (10) und dem oberen dritten Punkt (12) zu berücksichtigen.

5. Vorrichtung nach Anspruch 1, **dadurch gekennzeichnet, dass** ein Anschluss (31) des Komparators (28) vorgesehen ist, um einen insbesondere ein Rutschen betreffenden Sollwert entweder durch eine manuelle Steuerung seitens eines Bedieners oder durch eine automatische Steuerung einzubringen.

6. Vorrichtung nach einem der vorhergehenden Ansprüche, mit einer Hebeeinrichtung, deren beide Arme (7) unterschiedliche Winkelbewegungen aufweisen können, insbesondere um entgegengesetzt zueinander zu schwingen, so dass es möglich ist, dem Bodenprofil in Querrichtung zu folgen, **dadurch gekennzeichnet, dass** die empfindliche Einrichtung (S) zwei erste Wandler (T1a, T1b) aufweist, nämlich jeweils einen einem der Arme (7) zugeordneten ersten Wandler, um ein von der Winkelposition des jeweiligen Arms abhängiges elektrisches Signal auszugeben.

7. Vorrichtung nach einem der vorhergehenden Ansprüche, mit einer Hebeeinrichtung, die einen Zwischenrahmen (15) mit zwei seitlichen Anhängepunkten (16a, 16b) im oberen Teil und zwei Zylinder (111, 211) des dritten Punkts, die sich jeweils zwischen den beiden seitlichen Punkten des Rahmens und dem dritten Punkt (13) erstrecken, welcher mit der Zugmaschine verbunden ist, **dadurch gekennzeichnet, dass** zwei zweite Wandler (T2a, T2b) vorgesehen sind, nämlich jeweils ein einem der Zylinder (111, 211) des dritten Punkts zugeordneten zweiten Wandler, um ein elektrisches Signal auszugeben, das von der Länge des zugehörigen Zylinders des dritten Punkts abhängig ist.

8. Vorrichtung nach einem der vorhergehenden Ansprüche, **dadurch gekennzeichnet, dass** sie mit einer Vorrichtung (35, 36) zum Kontrollieren des Rutschens der Zugmaschine gekoppelt ist, welche mindestens einen Hydraulikzylinder (11; 111; 211) des dritten Punkts aufweist, der mit geringem Druck beaufschlagt ist und in einen Verriegelungsmodus mit konstanter Länge übergeht, wenn die Rutschrate einen vorgegebenen Grenzwert überschreitet, wodurch eine Lastübertragung auf die Zugmaschine möglich ist, wenn die Arme aufwärts gesteuert werden.

9. Vorrichtung nach einem der vorhergehenden Ansprüche, **dadurch gekennzeichnet, dass** die Wandler (T1, T1a, T1b und T2, T2a, T2b) potentiometrische Sensoren sind, die mit drei Ausgangssteckern (d1, d2, d23) versehen sind, welche zu den beiden Endpunkten eines Widerstands (21) und zu einem Schieber (23) gehören.

10. Vorrichtung nach Anspruch 9, **dadurch gekennzeichnet, dass** ein Verbinder (J1, J2) zur Herstellung der Verbindung mit den Steckern vorgesehen ist, und dass die an einem Ende der Verbinder (J1, J2) angebrachten Kabel (F1, F2) mit der Schaltung (C) verbunden sind.

11. Vorrichtung nach Anspruch 9 oder 10, **dadurch gekennzeichnet, dass** die Drähte der den Wandlern entsprechenden Verbinder zur Bildung eines Ausgangssteckers (D1, D2) untereinander verbunden sind, um eine Mischung der Wandlersignale zu bewirken, wobei der Stecker (D1, D2) mit einem Verbinder (J1, J2) verbindbar ist.

12. Vorrichtung nach Anspruch 7, **dadurch gekennzeichnet, dass** sie Verbinder (J2a, J2b) aufweist, welche jeweils den zweiten Wandlern (T2a, T2b) zugeordnet sind und parallel mit den Anschlüssen eines Steckers (D2) verbunden sind, der mit einem Verbinder (J2) zusammenwirken kann.
